# EUROPÄISCHE PATENTSCHRIFT

(11) **EP 1 072 873 B1**
(45) Veröffentlichungstag und Bekanntmachung des Hinweises auf die Patenterteilung: **08.10.2008**
(21) Anmeldenummer: 00115604.1
(22) Anmeldetag: 20.07.2000
(51) Int. Cl.: G01F 23/38, G01D 5/16

(54) **Vorrichtung zur Messung der Füllhöhe eines Flüssiggasbehälters**
Device for measuring liquid level in a container
Dispositif pour la mesure du niveau du liquide dans un récipient

(30) Priorität: 30.07.1999 DE 19935406
(43) Veröffentlichungstag der Anmeldung: 31.01.2001
(73) Patentinhaber: GOK Regler- und Armaturen-Gesellschaft mbH & Co.KG, 97252 Frickenhausen (DE)
(72) Erfinder: Metz, Peter Dipl.-Ing., 97318 Kitzingen (DE); Schmitzberger, Willibald, 97199 Ochsenfurt (DE)
(74) Vertreter: Gassner, Wolfgang

(56) Entgegenhaltungen:
- US-A- 5 023 806
- US-A- 5 650 721
- PATENT ABSTRACTS OF JAPAN vol. 1999, no. 05, 31. Mai 1999 (1999-05-31) & JP 11 051695 A (TOYOTA MOTOR CORP), 26. Februar 1999 (1999-02-26)

## Beschreibung

Die Erfindung betrifft eine Vorrichtung zur Messung der Füllhöhe eines Flüssiggasbehälters nach dem Oberbegriff des Anspruchs 1.

Eine solche Vorrichtung ist aus der US 5,023,806 bekannt. Dabei werden zur Bestimmung der Richtung des vom Magneten erzeugten Felds zwei senkrecht zueinander angeordnete Hall-Sensoren benutzt. Um die Richtung des Magnetfelds exakt bestimmen zu können, müssen die Hall-Sensoren exakt senkrecht zueinander ausgerichtet werden. Das erfordert einen hohen Montageaufwand.

Aus der DE 693 06 914 T2 ist eine Vorrichtung zur Messung des Füllstands von Schmelzen bekannt. Dabei sind an einer Behälteraußenseite linear eine Vielzahl von Hall-Sensoren angeordnet, welche mit einem an einem Schwimmer angebrachten vertikal bewegbaren Magneten an der Behälterinnenseite zusammenwirken.

Die DE 39 17 49117 A1 offenbart einen magnetisch betätigbaren Schalter. Die Richtung eines Magnetfelds ist damit allerdings nicht bestimmbar.

Aufgabe der Erfindung ist es, eine möglichst robuste und einfach herzustellende Vorrichtung zur Messung der Füllhöhe eines Flüssiggasbehälters anzugeben. Mit der Vorrichtung soll außerdem eine Fernübertragung der gemessenen Daten möglich sein.

Diese Aufgabe wird durch die Merkmale des Anspruchs 1 gelöst. Zweckmäßige Ausgestaltungen ergeben sich aus den Merkmalen der Ansprüche 2 bis 6.

Nach Maßgabe der Erfindung ist vorgesehen, daß die Anzeigevorrichtung einen gekreuzten Halbbrücken-(GMR)-Sensor mit zwei unterschiedlich magnetisierten Ebenen aufweist, mit dem die Richtung des vom Magneten erzeugten Felds über einen Winkelbereich von 360° eindeutig bestimmbar ist. - Eine Anordnung zweier separater in einem Winkel zueinander angeordneter magnetoresistiver Widerstände bzw. Hall-Sensoren ist nicht notwendig. Das erleichtert die Montage und schafft Freiheiten in der Anordnung. Mit der erfindungsgemäßen Vorrichtung kann die Stellung des Magneten genau erfaßt werden. Die vorgeschlagene Vorrichtung erlaubt eine präzise Messung des Füllstands. Sie ermöglicht außerdem eine Fernübertragung der gemessenen Daten.

Der Halbbrücken-Sensor kann in einem flanschartig ausgebildeten Gehäuse aufgenommen sein. Nach einem weiteren Ausgestaltungsmerkmal ist eine Einrichtung zur Umsetzung der vom Halbbrücken-Sensor gelieferten Signale in einen Meßwert vorgesehen. Dabei handelt es sich vorzugsweise um eine integrierte Schaltung. Der Halbbrücken-Sensor kann zusammen mit einer integrierten Schaltung zur Erfassung und Auswertung der gemessenen Signale im Gehäuse zusammengefaßt sein. In diesem Fall kann an die Stelle des Anzeigengehäuses auch ein besonderes den Halbbrücken-Sensor und die integrierte Schaltung aufnehmendes Schaltungsgehäuse treten. Ferner kann eine Einrichtung zur Funkübertragung des Meßwerts an einen entfernten Empfänger vorgesehen sein. Die erfindungsgemäße Vorrichtung kann dazu mit einer entsprechenden Schnittstelle zum Anschluß an die Einrichtung zur Übertragung mit Kabel oder zur Funkübertragung versehen sein.

Zur Stromversorgung ist vorzugsweise eine photovoltaische Einrichtung ggf. mit Akkumulator oder eine Batterie vorgesehen. Das erspart die Bereitstellung eines Netzanschlusses.

Nachfolgend wird eine Ausführungsbeispiel der Erfindung näher erläutert. Es zeigen:
- Fig. 1: eine schematische perspektivische Darstellung der Vorrichtung,
- Fig. 2: einen Flansch mit einem gekreuzten Halbbrücken-Sensor und
- Fig. 3: die vom Halbbrücken-Sensor gelieferten Signale in Abhängigkeit der Richtung des Magnetfelds.

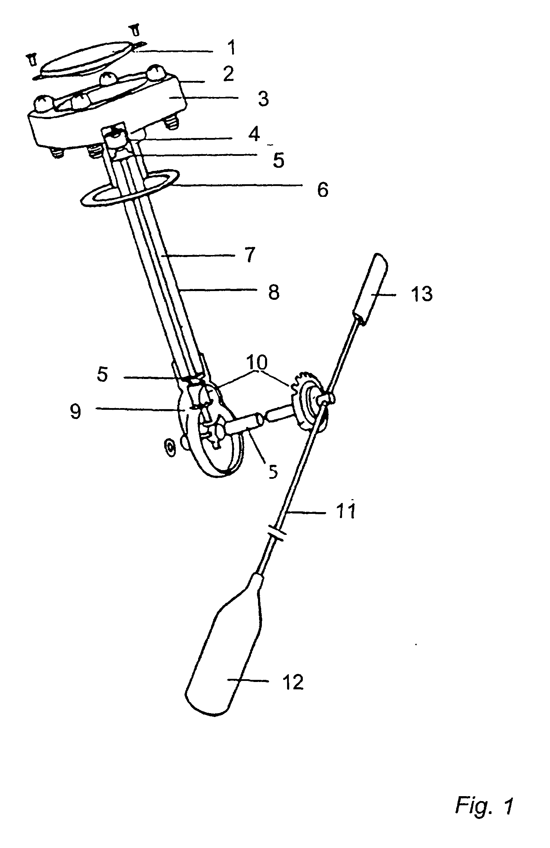

In Fig. 1 ist eine drehbar gelagerte (hier nicht gezeigte) Anzeigenadel in einem Anzeigegehäuse 1 aufgenommen, das zweckmäßigerweise aus einem transparenten Kunststoff hergestellt ist. Ein Gehäuse 2 ist nach Art eines Flansches ausgebildet. Es nimmt an der Oberseite das Anzeigegehäuse 1 auf Vorzugsweise wird das Anzeigengehäuse 1 in das Gehäuse 2 eingeschraubt. Mit 3 sind Schrauben zur Befestigung des Gehäuses 2 an der Außenseite eines (hier nicht gezeigten) Flüssigkeitsbehälters bezeichnet. Ein Magnet 4 ist endständig an einer in Lagerungen 5 gelagerten Welle 7 befestigt. Die Welle 7 ist von einem am Gehäuse 2 befestigten Rohr 8 umgeben. Mit 6 ist eine zwischen dem Flüssiggasbehälter und dem Gehäuse 2 vorzusehende Dichtung bezeichnet.

Ein in einem Getriebegehäuse 9 aufgenommenes Winkelgetriebe weist zwei ineinandergreifende Ritzel 10 auf. An einem der Ritzel 10 ist eine, beispielsweise aus Aluminium hergestellte, Stange 11 befestigt. An der Stange 11 ist am einen Ende ein Schwimmer 12 und am anderen Ende ein Gegengewicht 13 angebracht.

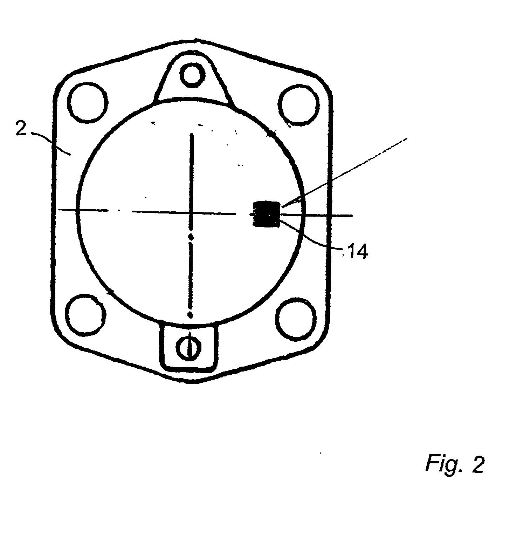

Bei dem in Fig. 2 gezeigten Ausführungsbeispiel ist ein einziger gekreuzter Halbbrücken-Sensor 14 angeordnet. Solche gekreuzten Halbbrücken-Sensoren 14 sind auch unter den Namen "Gigant Magneto Resistors (GMR-Sensoren)" bekannt. Die Benutzung solcher GMR-Sensoren ist besonders vorteilhaft, weil nur ein solcher Sensor benötigt wird und eine Justierung des Winkels im Vergleich zur Benutzung von zwei magnetoresistiven Widerständen entfällt.

In jedem Fall ist der gekreuzte Halbbrücken-Sensor 14 über Kabel mit einer vorzugsweise integrierten Schaltung zur Erfassung und Auswertung der gemessenen Signale verbunden.

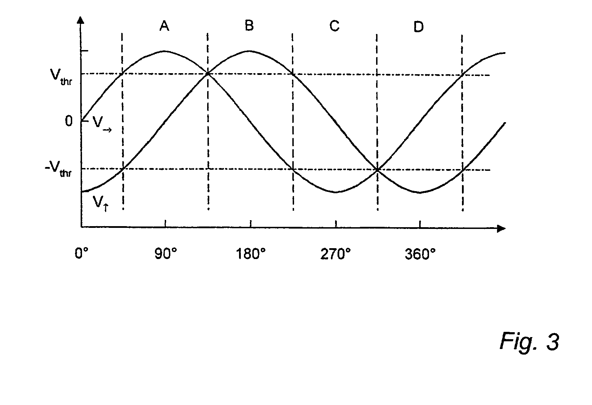

Diese Anordnung wird vorzugsweise in einem Schaltungsgehäuse (hier nicht gezeigt) zusammengefaßt, das statt der bisherigen Anzeigeeinrichtung verwendet wird. In Fig. 3 ist das von einem gekreuzten Halbbrücken-Sensor gemäß Fig. 2 gelieferte Signal in Abhängigkeit der Richtung des Magnetfelds gezeigt. Die beiden Halbbrücken-Signale sind um 90° versetzt und lassen sich durch einfache Vergleiche den vier Quadranten A, B, C und D zuordnen. Innerhalb eines Quadranten A, B, C und D bestimmt das Signal mit der größten Steigung die Richtung des Magnetfeldes durch lineare Interpolation.

Die Funktion der Vorrichtung ist folgende:

Die Stellung des Schwimmers 12 wird über das die Ritzel 10 aufweisende Winkelgetriebe auf die Welle 7 übertragen. Jeder Schwimmerstellung ist somit ein charakteristischer Drehwinkel des Magneten 4 zugeordnet. Die Richtung des durch den Magneten 4 erzeugten Magnetfelds wird reibungsfrei vom gekreuzten Halbbrücken-Sensor 14 erfaßt. Der Sensor 14 liegt in einem (hier nicht gezeigten) Stromkreis. In diesem Stromkreis besteht die Möglichkeit den Strom zu messen und anzuzeigen. Eine durch eine Widerstandsänderung des Sensors 14 bedingte Änderung des Stroms ist ein Maß für die Änderung der Füllhöhe im Behälter. Die gemessenen Werte können am Behälter abgelesen und/oder per Kabel oder Funk an eine entfernte Stelle übertragen werden.

### Bezugszeichenliste

- 1: Anzeigegehäuse
- 2: Gehäuse
- 3: Schrauben
- 4: Magnet
- 5: Lagerung
- 6: Dichtung
- 7: Welle
- 8: Rohr
- 9: Getriebegehäuse
- 10: Ritzel
- 11: Stange
- 12: Schwimmer
- 13: Gegengewicht
- 14: gekreuzter Halbbrücken-Sensor

## Patentansprüche

1. Vorrichtung zur Messung der Füllhöhe eines Flüssiggasbehälters, wobei ein durch die Füllhöhe bestimmter Stand eines im Behälterinneren angebrachten Schwimmers (12) über eine Welle (7) eine dazu korrespondierende Stellung eines endständig an der Welle (7) befestigten und in der Nähe der Behälterwand angeordneten Magneten (4) bewirkt und die Stellung des Magneten (4) mittels einer in dessen Wirkbereich auf der Behälteraußenseite angeordneten Anzeigevorrichtung (1, 2) erfaßbar ist, **dadurch gekennzeichnet, daß** die Anzeigevorrichtung (1, 2) einen gekreuzten Halbbrücken-, GMR, -Sensor (14) mit zwei unterschiedlich magnetisierten Ebenen aufweist, mit dem die Richtung des vom Magneten (4) erzeugten Felds über einen Winkelbereich von 360° eindeutig bestimmbar ist.

2. Vorrichtung nach Anspruch 1, wobei der Halbrücken-Sensor (14) in einem flanschartig ausgebildeten Gehäuse (2) aufgenommen ist.

3. Vorrichtung nach einem der vorhergehenden Ansprüche, wobei eine Einrichtung zur Umsetzung der vom Halbbrücken-Sensor (14) gelieferten Signale in einen Meßwert vorgesehen ist.

4. Vorrichtung nach einem vorhergehenden Anspruch, wobei der Halbbrücken-Sensor (14) und eine integrierte Schaltung zur Erfassung und Auswertung der gemessenen Signale im Gehäuse zusammengefaßt sind.

5. Vorrichtung nach einem der vorhergehenden Ansprüche, wobei eine Einrichtung zur Funkübertragung des Meßwerts an einen entfernten Empfänger vorgesehen ist.

6. Vorrichtung nach einem der vorhergehenden Ansprüche, wobei zur Stromversorgung eine photovoltaische Einrichtung oder eine Batterie vorgesehen ist.

## Claims

1. Device for the measurement of the filling level of a liquefied gas container, wherein a state of a float attached to the inside of the container, which state is determined by the filling level, produces via a shaft (7) a thereto corresponding position of a magnet (4) which is terminally mounted on the shaft (7) and is located in the vicinity of the container wall, and the position of the magnet (4) can be acquired via an indicator device (1, 2) which is located in the magnet's effective range on the outside of the container, **characterized in that** the indicator device (1, 2) has a crossed half-bridge, GMR (Giant Magneto Resistive) sensor (14) with two different magnetized levels with which the direction of the field generated by the magnet (4) can be unambiguously determined over an angle range of 360°.

2. Device as defined in claim 1, wherein the half-bridge sensor (14) is retained in a housing (2) formed like a flange.

3. Device as defined in one of the preceding claims, wherein a unit is provided for the conversion of the signals supplied by the half-bridge sensor (14) into a measured value.

4. Device as defined in one of the preceding claims, wherein the half-bridge sensor (14) and an integrated circuit for the acquisition and evaluation of the measured signals are combined in the housing.

5. Device as defined in one of the preceding claims, wherein a unit is provided for the radio transmission of the measured value to a remote receiver.

6. Device as defined in one of the preceding claims, wherein a photovoltaic unit or a battery is provided for the power supply.

## Revendications

1. Dispositif pour la mesure du niveau de remplissage d'un réservoir de gaz liquéfié, où une position définie par le niveau de remplissage d'un flotteur (12) monté à l'intérieur du réservoir par l'intermédiaire d'un arbre (7) engendre une position correspondante d'un aimant (4) fixé à l'extrémité de l'arbre (7) et placé à proximité de la paroi du réservoir et où la position de l'aimant (4) peut être saisie dans sa zone d'actionnement au moyen d'un dispositif d'affichage (1, 2) disposé sur le côté extérieur du réservoir **caractérisé en ce que** le dispositif d'affichage (1, 2) présente un capteur GMR en demi-pont croisé (14) avec deux niveaux différemment aimantés permettant de déterminer précisément le sens du champ généré par l'aimant (4) via une plage angulaire de 360°.

2. Dispositif selon la revendication 1, où le capteur en demi-pont (14) est logé dans un boîtier (2) en forme de bride.

3. Dispositif selon l'une des revendications précédentes, où un système est prévu pour la conversion en une valeur mesurée des signaux fournis par le capteur en demi-pont (14).

4. Dispositif selon l'une des revendications précédentes, où le capteur en demi-pont (14) et un circuit intégré pour la saisie et l'analyse des signaux mesurés sont regroupés dans le boîtier.

5. Dispositif selon l'une des revendications précédentes, où un système pour la radiotransmission de la valeur mesurée à un récepteur distant est prévu.

6. Dispositif selon l'une des revendications précédentes, où une installation photovoltaïque ou une batterie est prévue pour l'alimentation en courant.
